# EUROPÄISCHE PATENTSCHRIFT

(11) **EP 3 652 003 B1**
(45) Veröffentlichungstag und Bekanntmachung des Hinweises auf die Patenterteilung: **30.08.2023**
(21) Anmeldenummer: 18743390.9
(22) Anmeldetag: 06.07.2018
(51) Int. Cl.: B60G 7/00

(54) **ACHSLENKER SOWIE ACHSAUFHÄNGUNG FÜR EINE FAHRZEUGACHSE**
AXLE LINK AND AXLE SUSPENSION ARRANGEMENT FOR A VEHICLE AXLE
GUIDE D'ESSIEU AINSI QUE SUSPENSION D'ESSIEU POUR ESSIEU DE VÉHICULE

(30) Priorität: 12.07.2017 DE 102017115692
(43) Veröffentlichungstag der Anmeldung: 20.05.2020
(73) Patentinhaber: BPW Bergische Achsen KG, 51674 Wiehl (DE)
(72) Erfinder: MICHELS, Manfred, 51067 Köln (DE); PACK, Peter, 51588 Nümbrecht (DE)
(74) Vertreter: DREISS Patentanwälte PartG mbB
(86) Internationale Anmeldenummer: PCT/DE2018/100621
(87) Internationale Veröffentlichungsnummer: WO 2019/011376

(56) Entgegenhaltungen:
- EP-A1- 2 772 372
- WO-A1-2010/066232
- WO-A1-2011/059312
- DE-A1-102011 107 347
- DE-A1-102013 003 300
- DE-A1-102014 008 408
- ANDREW DUNN ET AL: "Nanosecond laser texturing for high friction applications", OPTICS AND LASERS IN ENGINEERING, Bd. 62, 29. Mai 2014 (2014-05-29), Seiten 9-16, XP055363681, AMSTERDAM, NL ISSN: 0143-8166, DOI: 10.1016/j.optlaseng.2014.05.003

## Beschreibung

Die Erfindung betrifft das technische Gebiet der Fahrwerke und vor allem der Nutzfahrzeug- Fahrwerke. Konkret betrifft die Erfindung einen Achslenker für eine Fahrzeugachse, vorzugsweise eine Nutzfahrzeugachse, und eine Achsaufhängung für eine Fahrzeugachse, vorzugsweise eine Nutzfahrzeugachse.

Aus der WO 2011/059312 A1, die den Oberbegriff der Ansprüche 1 und 17 zeigt, ist eine Radachsaufhängung für ein Fahrzeug bekannt, wobei Längslenker mittels Spannelementen an einen Achskörper geklemmt werden und ein Klemmkörper mit einem Vorsprung versehen ist, der in die längliche Vertiefung an dem Achskörper eingreift. Aus der EP 2 355 988 B1, der WO 2011/146163 A und der DE 10 2014 008 408 A1 bekannt ist jeweils die Verbindung zwischen einem Achskörper und den der Führung des Achskörpers dienenden Achslenkern bzw. Längslenkern eines Nutzfahrzeug-Fahrwerks. Der Achslenker als das äußere, also das umschließende Fahrwerkselement ist mit einer aufgerauten Oberflächenstruktur versehen. Diese ist dafür ausgebildet, sich in die Außenseite des Achskörpers einzugraben, um so zu einer verbesserten Verbindung der Fahrwerksteile zu gelangen.

Aus der DE 10 2013 003 300 A1 ist eine Achsaufhängung für Nutzfahrzeuge bekannt, bei der die Befestigung eines als ein Vierkantrohr ausgebildeten Achskörpers ausschließlich durch Klemmen erfolgt, wobei der Achskörper zwischen einem vorderen und einem hinteren Achslenkerabschnitt, welcher eine Luftfeder aufnimmt, verklemmt wird. Die Abstützung der Lenkerabschnitte erfolgt über schmale, leistenförmige Stützbereiche, die sich in Längsrichtung des Achskörpers erstrecken. Die Bauart nach der DE 10 2013 003 300 A1 hat sich für die Klemmverbindung zwischen einem Achslenker und einem als Vierkantrohr ausgebildeten Achskörper insoweit als vorteilhaft herausgestellt, als eine gewisse Grundelastizität der Verbindung erzielt wird. Allerdings kann es bei starken Belastungen zu Relativbewegungen der beteiligten Fahrwerksteile kommen, was unter bestimmten Umständen zu einem Versatz in Längsrichtung des Achskörpers führen kann, oder auch in Umfangsrichtung des Achskörpers. Ein solcher Versatz und vor allem ein sich dauerhaft einstellender Versatz ist bei den Fahrwerksteilen eines Nutzfahrzeug-Fahrwerks unerwünscht.

Aus der EP 1 912 806 B1 ist eine Achsaufhängung mit einem runden Achskörper und einem aus Gussmaterial bestehenden Achslenker bekannt. Der Achslenker weist eine kreisrunde Öffnung auf, die an einem Ihrer Umfangsbereiche mit einem Schlitz versehen ist. Durch Verminderung des Schlitzes kommt es auf nahezu dem gesamten Umfang des Rundachskörpers zu dessen Einklemmen in der runden Öffnung des Achslenkers. Um höhere Umfangsmomente aufzunehmen, wird zusätzlich die Anordnung einer Klebstoffschicht im Bereich der runden Klemmung vorgeschlagen. Allerdings ist der Achslenker nach der EP 1 912 806 B1 wegen der vollständigen Umschließung des Achskörpers voluminös, und von entsprechend hohem Gewicht. Da der Achslenker nur im Bereich des Schlitzes geringfügig aufweitbar ist, ist die gegenseitige Montage von Achslenker und Achsrohr schwierig. Entweder muss der Achslenker in Längsrichtung des Achsrohrs auf dieses aufgeschoben werden, oder umgekehrt muss das Achsrohr über eine gewisse Länge von der Seite her und mit geringem Spiel in die knapp bemessene Öffnung des Achslenkers hineingeschoben werden. Zusätzlich ist die Montage dadurch erschwert, dass im Falle eines durchgehenden Achskörpers zwei Achslenker zu befestigen sind und daher aus zwei entgegengesetzten Richtungen montiert werden muss.

Der Erfindung liegt die **Aufgabe** zugrunde, bei einem zur Verwendung mit einem Rundachskörper bestimmten Achslenker sowie bei einer entsprechenden Achsaufhängung die Gefahr von Relativbewegungen zwischen den verbundenen Teilen zu reduzieren, und eine einfache Montage ohne Festlegung auf eine bestimmte Montagerichtung zu ermöglichen.

Gelöst wird diese Aufgabe durch einen Achslenker mit den Merkmalen des Patentanspruchs 1 und durch eine Achsaufhängung mit den Merkmalen des Patentanspruchs 17.

Der vorgeschlagene Achslenker setzt sich aus einem in Fahrtrichtung vorderen und einem in Fahrtrichtung hinteren Lenkerabschnitt zusammen, wobei die Lenkerabschnitte mit an ihnen angeformten Stützflächen zur Abstützung gegen den Rundachskörper der Fahrzeugachse versehen, und durch Zugelemente miteinander verbunden sind. Dabei ist wesentlich, dass zumindest die Stützfläche am vorderen Lenkerabschnitt auf einzelne Schalen, vorzugsweise auf zwei Schalen, mit jeweils in Achsenumfangsrichtung gebogener Schalenkontur aufgeteilt ist. Zwischen den Schalen befindet sich ein stützflächenfreier Umfangsabschnitt. Weiterhin ist vorgesehen, dass auch die an dem hinteren Lenkerabschnitt vorhandene Stützfläche nicht durchgehend ist, sondern auf einzelne Schalen mit in Achsenumfangsrichtung gebogener Schalenkontur aufgeteilt ist, wobei sich wiederum zwischen den Schalen ein stützflächenfreier Umfangsabschnitt befindet, d.h. ein Segment ohne eine unmittelbare Abstützung des hinteren Lenkerabschnitts an dem Rundachskörper.

Die vorgeschlagene Achsaufhängung für eine Fahrzeugachse umfasst einen Rundachskörper und mindestens einen den Rundachskörper kreuzenden und gegenüber dem Fahrzeug abgestützten Achslenker. Dieser setzt sich aus einem in Fahrtrichtung vorderen und einem in Fahrtrichtung hinteren Lenkerabschnitt zusammen, wobei die Lenkerabschnitte mit an ihnen angeformten Stützflächen unmittelbar gegen die zylindrische Außenseite des Rundachskörpers abgestützt sind, und durch quer zu dem Rundachskörper sich erstreckende Zugelemente miteinander verbunden sind. Dabei ist wesentlich, dass zumindest die Stützfläche des vorderen Lenkerabschnitts auf einzelne Schalen, vorzugsweise auf zwei Schalen, mit in Achsenumfangsrichtung jeweils gebogener Schalenkontur aufgeteilt ist. Zwischen den Schalen befindet sich ein Umfangsabschnitt, auf dem keine unmittelbare Abstützung des Lenkerabschnitts an dem Rundachskörper erfolgt. Weiterhin ist vorgesehen, dass auch die an dem hinteren Lenkerabschnitt vorhandene Stützfläche nicht durchgehend ist, sondern auf einzelne Schalen mit in Achsenumfangsrichtung gebogener Schalenkontur aufgeteilt ist, wobei sich wiederum zwischen den Schalen ein stützflächenfreier Umfangsabschnitt befindet

Trotz der Verwendung eines im Querschnitt runden Achskörpers wird daher nicht der naheliegende Weg eines Klemmens über den gesamten oder nahezu den gesamten Umfang beschritten, was zu einem Maximum an Klemmfläche führen würde. Stattdessen ist die Stützfläche auf einzelne Schalen aufgeteilt, und nur an den Konturen dieser Schalen kommt es zu einem unmittelbaren Kontakt zwischen dem Achslenker und der Außenseite des Rundachskörpers.

Vorzugsweise ist die Stützfläche des vorderen Lenkerabschnitts auf zwei Schalen mit jeweils in Achsenumfangsrichtung gebogener Schalenkontur aufgeteilt, wobei sich zwischen den Schalen ein Umfangsabschnitt und damit ein Segment befindet, auf dem keine unmittelbare Abstützung des Achslenkers an dem Achsrohr stattfindet.

Da eine Abstützung nur in diskreten Bereichen stattfindet, nämlich an den Konturen der Schalen, ist die insgesamt zur Verfügung stehende Klemmfläche rein rechnerisch gegenüber dem Maximum, also einer vollumschlossenen Klemmung, reduziert. Es hat sich jedoch herausgestellt, dass dies nicht unbedingt von Nachteil ist, da es für die Qualität einer dauerhaften Verbindung zwischen dem Achslenker und dem Achskörper nicht allein auf die Größe der die Klemmkräfte übertragenden Flächen ankommt, sondern auch andere Faktoren eine Rolle spielen können, etwa die konkrete Anordnung der Klemmzonen an dem Achslenker bzw. an den beiden Lenkerabschnitten.

Durch den Verzicht auf eine vollumfängliche oder nahezu vollumfängliche Klemmung lassen sich zudem Vorteile bei der Montage der Achsaufhängung erzielen, da eine bestimmte Montagerichtung nicht notwendig ist, diese vielmehr flexibel erfolgen kann. Die beiden Lenkerabschnitte lassen sich z. B. von vorne bzw. hinten her gegen das Achsrohr platzieren und dann unter Klemmen des Achsrohrs miteinander verbinden. Alternativ ist eine Montage in Achsrichtung durchführbar. Mit einer Ausgestaltung des Achslenkers und der Achsaufhängung wird vorgeschlagen, dass der vordere Lenkerabschnitt aus Metallguss besteht und er einen Hohlraum aufweist, und dass sich auf dem zwischen den Schalen angeordneten und daher stützflächenfreien Umfangsabschnitt eine in diesen Hohlraum führende Öffnung befindet. Diese Öffnung erleichtert im Rahmen der gießtechnischen Herstellung des Lenkerabschnitts das Entfernen des Gießkerns. Für denselben Zweck können auch an den Seitenflächen des Lenkerabschnitts Öffnungen vorhanden sein, durch die sich der gießtechnisch notwendige Gießkern bzw. zumindest Teile des Gießkerns nach dem Guss entfernen lassen.

Auch der hintere Lenkerabschnitt kann aus Metallguss bestehen. Alternativ ist der hintere Lenkerabschnitt jedoch auch als ein Schmiedeteil ausführbar.

Mit einer Ausgestaltung des Achslenkers und der Achsaufhängung wird vorgeschlagen, dass sich die Schalen beider Lenkerabschnitte aufsummiert über einen Umfang erstrecken, der zwischen 40% und 70% des Gesamtumfangs des Rundachskörpers beträgt, und besonders bevorzugt zwischen 55% und 70% des Gesamtumfangs.

Ebenfalls vorteilhaft ist, wenn in Achsenumfangsrichtung die Erstreckung der Schalen das 1- bis 1 ,6-fache der Erstreckung des zwischen ihnen angeordneten Segments, also des stützflächenfreien Umfangsabschnitts, beträgt. Vorzugsweise weist jede Schale eine größere Breite quer zur Hauptlängserstreckung des Achslenkers auf, als der Lenkerabschnitt in seinem direkt an die Schale angrenzenden Bereich aufweist. Die Schalen ragen also seitlich über die Grundbreite des Lenkerabschnitts hinaus, was zu einer verbesserten Abstützung gegenüber seitlichen Kräften führt. Von besonderem Vorteil ist, wenn die Oberfläche der an dem vorderen Lenkerabschnitt und / oder an dem hinteren Lenkerabschnitt vorhandenen Schalen mit einer die Haftfähigkeit verbessernden Aufrauhung versehen ist. Die Aufrauhung kann z. B. in einer Oberflächenstruktur bestehen, die durch Bearbeiten mittels eines Festkörperlasers erzeugt wird. Es hat sich herausgestellt, dass es durch die in einem Strahlverfahren und vorzugsweise in einem Laserstrahlverfahren hergestellte Oberflächenstruktur zu einem besonders festen Sitz in den Zonen unmittelbaren Kontakts zwischen den Innenseiten der Schalen und der Außenseite und damit der Oberfläche des Achsrohrs kommt. Die durch das Strahlverfahren, nämlich eine Elektronenstrahlbearbeitung oder vorzugsweise eine Laserstrahlbearbeitung, erzeugte Oberflächenstruktur weist eine größere Härte als der Ausgangswerkstoff auf und insbesondere eine Oberflächenhärte, aufgrund deren sich die hervorstehenden Spitzen der durch die Bearbeitung erzeugten Oberflächenstruktur in das gegenüberliegende Material eingraben. Es kommt also, zusätzlich zu dem Klemmen, zu einem Formschluss im Mikrobereich. Dieser Effekt ist dann besonders stark, wenn die Oberfläche des Achskörpers keine vergleichbar hohe Materialhärte aufweist. Es wird somit ein besonders wirksames Übertragen der Betriebskräfte von dem einen auf das andere Fahrwerksteil erreicht, ohne dass es zu einem dauerhaften, d. h. bleibenden Versatz kommt, sei dies in Achsrichtung oder, aufgrund der Bremskräfte, in Achsenumfangsrichtung.

Der vordere und vorzugsweise auch der hintere Lenkerabschnitt besteht aus einem Sphäroeisenguss. Dieses Material ist für die Strahlbearbeitung und insbesondere die Laserbearbeitung in besonderer Weise geeignet, da es durch die Bearbeitung zu einem Härten der Materialaußenseite kommt. Dies schafft die Voraussetzung dafür, dass die so gebildeten Materialspitzen hart genug sind, sich in das gegenüberliegende, weniger harte Material des Achsrohrs einzugraben.

Als besonders geeignet hat sich der Eisengusswerkstoff GJS erwiesen, insbesondere jener mit der Bezeichnung EN-GJS-600-3. Dieser zur Gruppe der Sphäroguss-Materialien gehörende Werkstoff zeichnet sich durch kugelförmig eingelagertes Graphit aus. Diese Materialstruktur bedingt eine hohe Festigkeit des Materials und hat beim Strukturieren mit einem Elektronenstrahl oder einem Laserstrahl den Vorteil, dass das umgeschmolzene Material im Bereich der Struktur eine sehr hohe Härte aufweist, bei gleichzeitig zähen Materialeigenschaften. Ebenfalls geeignet ist der Sphäroeisenguss-Werkstoff GCS.

Zu der Gruppe der für das Aufrauen in den Stützbereichen in Betracht kommenden Strahlverfahren zählen die Elektronenstrahl- und die Laserstrahlbearbeitungen. Während das Elektronenstrahlverfahren im Vakuum mit beschleunigten Elektronen arbeitet, wird beim Laserstrahlverfahren ein hochenergetischer Lichtstrahl aus monochromatischem, kohärentem Licht erzeugt. Durch eine Fokussierung erzeugt man eine hohe Energiedichte. Für die Laserstrahlbearbeitung existiert eine Vielfalt an Laserstrahlquellen, die sich durch Wellenlängen, Pulsleistungen, Energiedichten mit Anwendungspotenzial unterscheiden. Diese Laserstrahlquellen können anhand des Mediums zur Strahlerzeugung kategorisiert werden. Dabei lassen sich Gaslaser, Flüssiglaser und Festkörperlaser unterscheiden.

Für das hier angegebene Verfahren der Oberflächenstrukturierung an Fahrwerkselementen hat sich der Bautyp des Festkörperlasers als besonders geeignet herausgestellt. Bevorzugt ist ein diodengepulster Hochleistungslaser mit einer Wellenlänge <1000 nm und einer maximalen Pulsenergie von 80 mJ.

Der für das Aufrauen eingesetzte Laser ist z. B. ein Hochleistungs-Nanosekundenlaser. Mit diesem hocheffizienten Kurzpulslaser wird im Fokusbereich des Laserstrahls so viel Energie in die bearbeitete Oberfläche am Achslenker eingebracht, dass durch diesen Impuls das aufgeschmolzene Material verdrängt wird, und im Stützbereich die spezielle, aufgeraute Oberflächenstruktur entsteht. Gleichzeitig wird im Stützbereich das Material, bedingt durch die schnelle Abkühlung, gehärtet.

Im Prinzip ließe sich, bei entsprechendem energetischen Aufwand, die Schale auf ihrer gesamten Kontur mit der die Haftfähigkeit verbesserten Aufrauhung versehen. Es hat sich jedoch herausgestellt, dass dieser erhöhte Aufwand nicht erforderlich ist und stattdessen bereits eine partielle Aufrauhung ausreicht, bei der die Schale mindestens einen aufgerauhten Oberflächenbereich und mindestens einen nicht aufgerauhten, also im Wesentlichen glatten Oberflächenbereich aufweist.

Vorzugsweise weisen in diesem Fall die Oberflächenbereiche jeweils einen der Form eines Teilkreises folgenden Biegeverlauf auf, wobei die in dem aufgerauten Oberflächenbereich vorhandenen Materialspitzen in Bezug auf den durch den glatten Oberflächenbereich bestimmten Teilkreis radial überstehen.

Der aufgerauhte Oberflächenbereich kann kleiner als der glatte Oberflächenbereich sein. Ein solches Größenverhältnis kann dann sinnvoll sein, wenn der aufgeraute Oberflächenbereich an einer bestimmten Stelle an der Schale platziert ist. Daher wird vorgeschlagen, dass nur ein Bereich der Schale mit der Aufrauhung versehen ist, welcher zu dem anderen Lenkerabschnitt nächstliegend angeordnet ist. Es hat sich gezeigt, dass die aufgeraute Oberflächenstruktur in diesem Bereich das Haften der Fahrwerksteile in einem höheren Maße verbessert, als das Vorsehen einer aufgerauten Oberfläche in einem anderen Bereich. Ferner wird vorgeschlagen, dass der aufgeraute Oberflächenbereich die Form eines Streifens hat, der sich überwiegend quer zur Hauptlängserstreckung des Achslenkers erstreckt. Der Streifen kann sich über die gesamte oder nahezu die gesamte Breite der Schale erstrecken. Schließlich wird vorgeschlagen, dass die die beiden Lenkerabschnitte gegeneinander verspannenden Zugelemente Bestandteile mindestens eines und vorzugsweise zweier U-förmiger Gewindebügel sind. Der Gewindebügel ist mit seinem Bügelabschnitt um ein an dem vorderen Lenkerabschnitt gießtechnisch angeformtes Widerlager herumgeführt. Weitere Vorteile und Einzelheiten ergeben sich aus der nachfolgenden Beschreibung eines Ausführungsbeispiels, welches auf der Zeichnung dargestellt ist Es zeigen:
Fig. 1 in einer Seitenansicht Bestandteile eines luftgefederten Nutzfahrzeug-Fahrwerks, unter anderem einen zweiteiligen Achslenker sowie einen der Lagerung der Fahrzeugräder dienenden Rundachskörper;
Fig. 2 eine perspektivische Ansicht des vorderen Lenkerabschnitts des Achslenkers;
Fig. 3 eine andere perspektivische Ansicht des vorderen Lenkerabschnitts des
   Achslenkers;

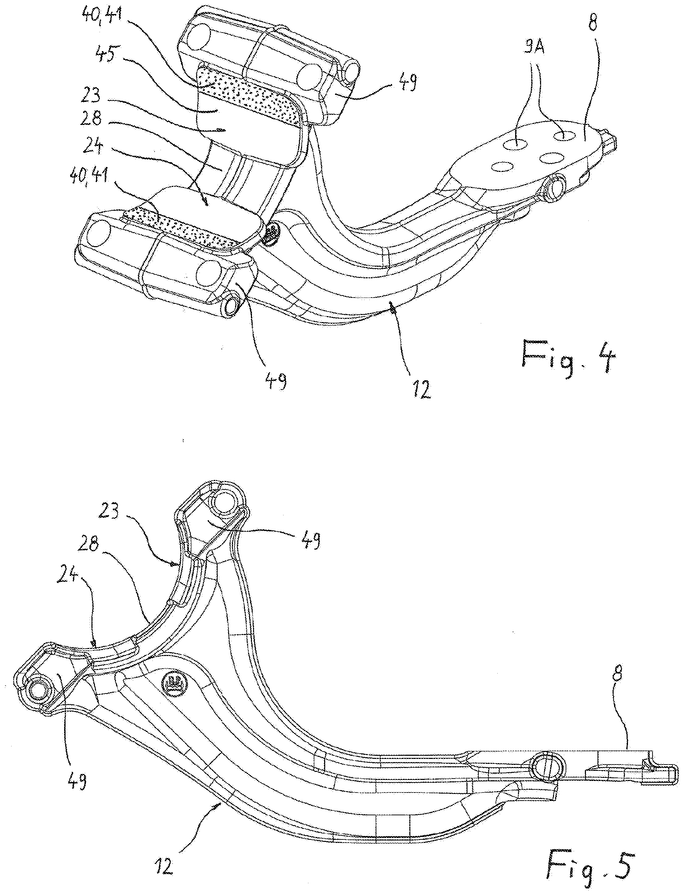

Fig. 4 eine perspektivische Ansicht des hinteren Lenkerabschnitts des Achslenkers;
Fig. 5 eine Seitenansicht des hinteren Lenkerabschnitts;
Fig. 6 einen schematischen Längsschnitt durch den Bereich der Achseinbindung, und zwar in einem Zustand noch vor dem endgültigen Klemmen des Achskörpers;
Fig. 7 einen Schnitt durch die Achseinbindung mit stark übertriebener Wiedergabe der unrunden Verformung des Achskörpers bei dessen endgültigem Klemmen; und
Fig. 8 in drei Stadien (Figuren 8a - 8c) und in stark übertriebener Wiedergabe das

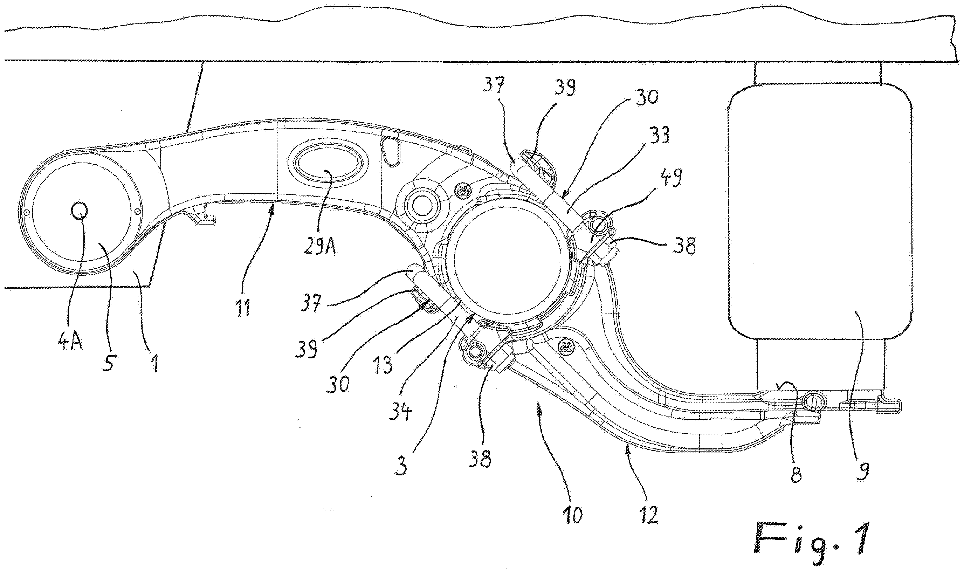

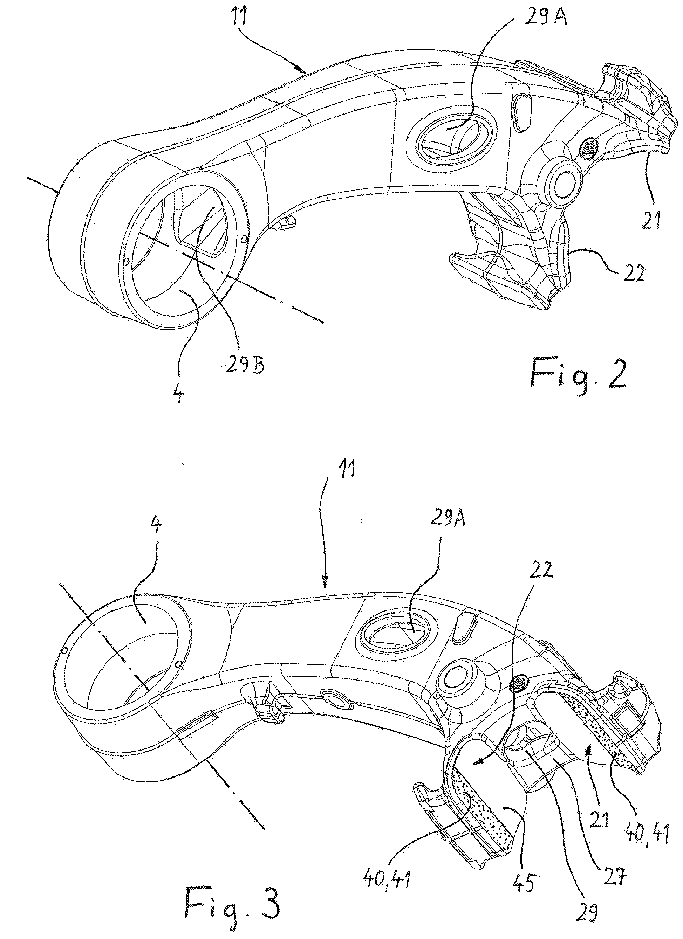

Eingraben von Materialspitzen in den Achskörper beim zunehmenden Klemmen. Die im Folgenden beschriebene Achsaufhängung findet Anwendung vor allem bei luftgefederten Fahrzeugachsen, die mit einem Achskörper mit dem Querschnitt eines Rundrohrs versehen sind. Derartige Fahrzeugachsen kommen vor allem bei Nutzfahrzeugen und insbesondere bei Lkw-Anhängern und -aufliegern zum Einsatz. Derartige Fahrzeugachsen sind für hohe Transportgewichte, hohe Belastungen im Straßenbetrieb sowie für die Verwendung mit Scheiben- oder Trommelbremsen ausgelegt. Unter dem Fahrzeugrahmen eines in Fig. 1 nicht näher dargestellten Nutzfahrzeugfahrwerks ist auf jeder Fahrzeugseite eine starre Lenkerstütze 1 befestigt. Diese nimmt ein Schwenklager für die Achsaufhängung auf. Zur Führung des von der einen bis zur anderen Fahrzeugseite durchgehenden Achskörpers 3 dient auf jeder Fahrzeugseite ein Achslenker 10. Der Achslenker 10 weist an seinem in Fahrtrichtung vorderen Ende einen Gelenkbereich auf mit einem einstückig angegossenen Lenkerauge 4 (Fig. 2). Das Lenkerauge 4 ist Bestandteil eines Schwenklagers, um mittels eines spielfrei durch die Lenkerstütze 1 hindurch geführten Bolzens 4A den Achslenker 10 in einer vertikalen Ebene schwenkbar an der chassisfesten Lenkerstütze 1 zu halten. Zwischen dem Bolzen 4A und der Querbohrung in dem Lenkerauge 4 befindet sich eine radial elastische Buchse.

In Fahrtrichtung hinten ist der Achslenker 10 mit einer Befestigungslöcher 9A aufweisenden Auflagefläche 8 für eine Luftfeder 9 versehen. Die Luftfeder 9 stützt sich mit einer oberen Abschlussplatte von unten gegen den Fahrzeugrahmen ab. Zur Befestigung der Luftfeder 9 ist der Achslenker 10 daher durch seinen hinteren Lenkerabschnitt 12 über den Achskörper 3 hinaus nach hinten verlängert. Der Achslenker 10 ist somit zweiteilig, und setzt sich zusammen aus dem in Fahrtrichtung vorderen und das Lenkerauge 4 aufweisenden Lenkerabschnitt 11 , und dem in Fahrtrichtung hinteren Lenkerabschnitt 12 mit den Befestigungslöchern 9A für die Luftfeder 9. Der vordere Abschnitt 1 1 des Achslenkers 10 erstreckt sich von dem Lenkerauge 4 des Schwenklagers bis zu dem Achskörper 3.

Bei der Montage des Fahrwerks werden der vordere Lenkerabschnitt 11 und der hintere Lenkerabschnitt 12 miteinander und unter Klemmen des zwischen ihnen angeordneten Rundachskörpers 3 verbunden. Die Zweiteiligkeit des Achslenkers 10 hat unter anderem den Vorteil, dass durch Auswahl der Länge des vorderen und des hinteren Lenkerabschnitts die fahrzeugspezifischen Abstände zwischen dem Schwenklager, dem Achskörper 3 und der Luftfeder 9 individuell, zum Beispiel kundenspezifisch, realisierbar sind.

Für einen optimalen Kraftverlauf im Bereich der Achseinbindung ist die Gestaltung der Lenkerabschnitte derart, dass der vordere Lenkerabschnitt 1 1 nach schräg unten auf den Achskörper 3 stößt, und der hintere Lenkerabschnitt 12 nach schräg oben auf den Achskörper 3 stößt. Die Lenkerabschnitte 1 1 , 12 bestehen vorzugsweise beide aus Metallguss und vorzugsweise aus einem Sphäroeisenguss, insbesondere aus dem Werkstoff Kugelgrafitguss GCS. Ebenfalls als geeignet hat sich der Eisengusswerkstoff GJS erwiesen, und hier vor allem jener mit der Bezeichnung EN-GJS-600-3. Dieser zur Gruppe der Sphäroguss-Materialien gehörende Werkstoff zeichnet sich durch kugelförmig eingelagertes Graphit aus. Diese Materialstruktur bedingt eine hohe Festigkeit des Materials. Sie hat im Fall eines Oberflächenstrukturierens mittels z. B. eines Festkörperlasers den Vorteil, dass das umgeschmolzene Material im Bereich der Struktur eine hohe Härte bei gleichzeitig zähen Materialeigenschaften aufweist.

Der Achskörper 3 ist an seinem fahrzeugaußen gelegenen Ende mit einem Achsschenkel zur Lagerung der Radnabe des Fahrzeugrades versehen. An dem Achsschenkel ist zudem die jeweilige Bremse befestigt. Ist der Achskörper 3 ein langgestrecktes, von der einen zur anderen Fahrzeugseite durchgehendes Achsrohr, so ist er an seinen beiden Enden mit Achsschenkeln zur Lagerung der jeweiligen Radnaben der jeweiligen Fahrzeugräder versehen.

Das Achsrohr 3 ist ein Rundrohr. Seine zylindrische Außenseite 13 ist unbehandelt. Insbesondere ist es nicht erforderlich, die Außenseite 13 künstlich aufzurauen.

Zum Einklemmen des zylindrischen Achskörpers 3 zwischen dem vorderen Lenkerabschnitt 1 1 und dem hinteren Lenkerabschnitt 12 ist der Achslenker 10 mit gießtechnisch angeformten Schalen 21 , 22, 23, 24 versehen. Die Schalen 21 , 22, 23, 24 weisen an ihrer Innenseite jeweils eine teilkreisförmig gebogene Schalenkontur auf, mit der sie flächig gegen die zylindrische Außenseite 13 des Achsrohrs anliegen. Die Schalen sind materialeinheitlicher Teil des Gusses, aus dem der jeweilige Lenkerabschnitt 1 1 , 12 besteht.

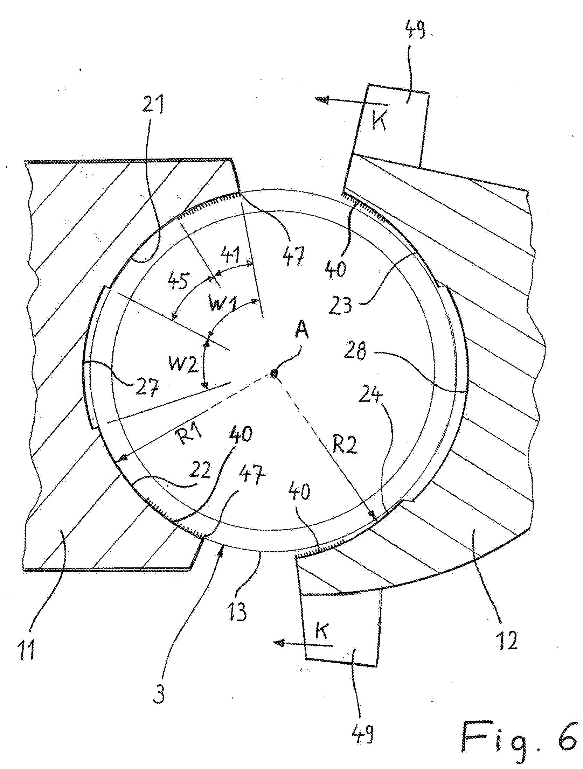

Vorzugsweise erstrecken sich alle Schalen 21 , 22, 23, 24 primär in Längsrichtung des Achskörpers 3. Insbesondere die an dem vorderen Lenkerabschnitt 1 1 ausgebildeten Schalen 21 , 22 weisen jeweils eine größere Breite quer zur Hauptlängserstreckung des Achslenkers auf, als dieser Lenkerabschnitt 1 1 in seinem an die Schale 21 , 22 direkt angrenzenden Bereich. Vorzugsweise weist auch jede an dem hinteren Lenkerabschnitt 1 1 ausgebildete Schale 23, 24 eine größere Breite quer zur Hauptlängserstreckung des Achslenkers auf, als der hintere Lenkerabschnitt 12 in seinem Hauptlängsbereich. Beim Ausführungsbeispiel sind an dem vorderen Lenkerabschnitt 11 insgesamt zwei Schalen 21 , 22 ausgebildet. Sie erstrecken sich, wie in Fig. 6 dargestellt, jeweils in Teilkreisform über einen Winkel W1 , der zum Beispiel zwischen 50° und 65° beträgt, und besonders bevorzugt über einen Winkel W1 zwischen 55° und 60°. Zwischen den beiden Schalen 21 , 22 befindet sich als Zwischensegment der stützflächenfreie Umfangsabschnitt 27. Dieser erstreckt sich zum Beispiel über einen Wnkel W2 von 35° bis 45°.

Die Größe des Umfangsabschnitts 27 ist ausreichend, dass dort eine Öffnung Platz findet, welche in einen Hohlraum hineinführt, mit dem der aus Metallguss hergestellte Lenkerabschnitt 11 versehen ist. Indem der Lenkerabschnitt 1 1 ein gegossener Hohlkörper ist, weist er ein reduziertes Gewicht bei zugleich hoher Festigkeit auf. Der Hohlraum bedingt allerdings gießtechnisch einen Gießkern, welcher nach dem Guss zu entfernen ist. Das Entfernen des Gießkerns kann teilweise durch die auf dem Umfangsabschnitt 27 vorhandene Öffnung 29 erfolgen.

Für eine noch bessere gießtechnische Entformbarkeit kann der Lenkerabschnitt 1 1 mit weiteren Öffnungen 29A an seinen Seitenflächen versehen sein, sowie mit einer Öffnung 29B, die von dem Lenkerauge 4 in den Hohlraum führt.

Auch an dem hinteren Lenkerabschnitt 12 sind zwei Schalen 23, 24 ausgebildet. Diese erstrecken sich in Achsenumfangsrichtung jeweils in Teilkreisform über einen Wnkel von 45° bis 60°, vorzugsweise über einen Winkel zwischen 50° und 55°. Zwischen den beiden Schalen 23, 24 befindet sich als Zwischensegment der stützflächenfreie Umfangsabschnitt 28. Dieser erstreckt sich zum Beispiel über einen Wnkel von 30° bis 40°.

Der Wnkel, auf dem der vordere Lenkerabschnitt 11 mit seinen zwei Schalen 21 , 22 und dem dazwischenliegenden Umfangsabschnitt 27 den Rundachskörper 3 umgibt, ist größer als der Winkel, auf dem der hintere Lenkerabschnitt 12 mit seinen zwei Schalen 23, 24 und dem dazwischenliegenden Umfangsabschnitt 28 den Rundachskörper 3 umgibt. Zum Beispiel beträgt der erstgenannte Wnkel 145° bis 175°, und der zweitgenannte Wnkel 120° bis 150°.

In Fig. 6 ist die Einspannung des auf der Achsmittellinie A angeordneten Rundachskörpers 3 zwischen den beiden Lenkerabschnitten 1 1 , 12 wiedergegeben, und zwar in einer Montagesituation noch vor dem eigentlichen Klemmen, d. h. noch vor dem Erzeugen der Spannkräfte mittels zweier Gewindebügel 30. Gemäß Fig. 6 kann es Abweichungen geben zwischen dem Radius R1 der zylindrischen Außenseite 13 des Achskörpers 3 und den Radien, welche die Innenseiten der Schalen aufweisen. Dargestellt ist eine Ausführungsform, bei der die zwei Schalenkonturen an dem vorderen Lenkerabschnitt 11 einen teilkreisförmigen Biegeverlauf aufweisen, dessen Radius gleich ist dem Radius R1 der Außenseite 13 des zylindrischen, unverformten Achskörpers 3.

Auch die Konturen der Schalen 23, 24 des hinteren Lenkerabschnitts 12 weisen jeweils einen teilkreisförmigen Verlauf auf, jedoch ist der Radius R2 dieser Schalenkonturen größer und vorzugsweise ist er 2 % bis 5 % größer, als der Radius R1 der Außenseite 13 des unverformten Achskörpers 3.

Auch an dem vorderen Lenkerabschnitt 1 1 kann der Radius der Schalen 21 , 22 größer und vorzugsweise kann er 2 % bis 5 % größer sein, als der Radius R1 der Außenseite 13 des unverformten Achskörpers 3.

Der Achskörper 3 hat eine Wanddicke von weniger als 10 mm und vorzugsweise eine Wanddicke von nur 9 mm. Er ist daher bei entsprechenden Kräften verformbar, wobei der Achskörper seinen ursprünglich zylindrischen Querschnitt mit einheitlichem Radius R1 einbüßt, und sich Umfangsbereiche flächig gegen die mit den größeren Radien R2 versehenen Schalen des hinteren 12 und/oder des vorderen 1 1 Lenkerabschnitts legen.

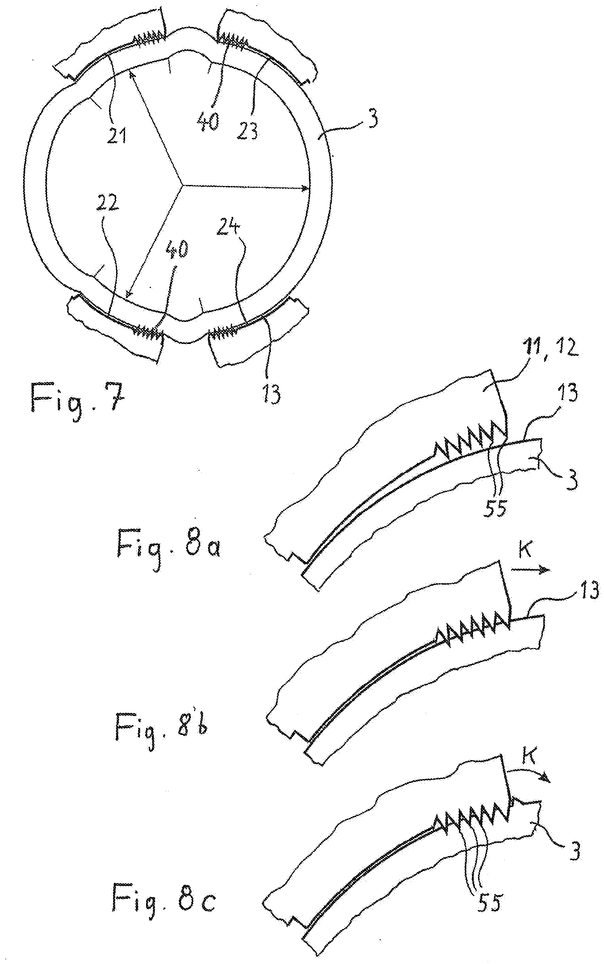

In der Fig. 7 ist, wenngleich stark übertrieben, dieses Verformen des Achskörpers 3 beim Anziehen der Gewindebügel 30 illustriert.

Das insoweit an den Stützflächen des hinteren Lenkerabschnitts 12 vorhandene Übermaß hat bei der Montage zur Folge, dass der Befestigungsbereich des hinteren Lenkerabschnitts 12 geringfügig um den Rundachskörper 3 herum verformt wird. Diese Verformung ist im reversiblen Bereich, also keine bleibende Verformung.

Für eine nochmals verbesserte Haftung zwischen Achslenker 10 und Rundachskörper 3 sind die Schalen an ihrer Schalenkontur mit einer Aufrauhung 40 versehen. Eine solche Aufrauhung 40 sollte vorzugsweise an jeder der vier Schalen 21 , 22, 23, 24 ausgebildet sein, zumindest jedoch an den beiden Schalen 21 , 22 des vorderen Lenkerabschnitts 1 1. Die Aufrauhung erstreckt sich nicht über die gesamte Fläche innen an der jeweiligen Schale, sondern sie ist nur partiell, indem die jeweilige Schale einen aufgerauten Oberflächenbereich 41 und einen nicht aufgerauten, also vergleichsweise glatten Oberflächenbereich 45 aufweist. Gemäß Fig. 6 weisen beide Oberflächenbereiche 41, 45 den teilkreisförmigen Verlauf auf.

Für eine gute Kräfteübertragung kann bereits ausreichend sein, wenn der aufgeraute Oberflächenbereich 41 kleiner als der glatte Oberflächenbereich 45 ist.

Die Aufrauhung ist dergestalt, dass die in dem aufgerauten Oberflächenbereich 41 vorhandenen Materialspitzen in Bezug auf den durch den glatten Oberflächenbereich 45 bestimmten Teilkreis radial etwas überstehen. Dadurch ist sichergestellt, dass auch der nicht aufgeraute Oberflächenbereich 45 in unmittelbarem metallischem Kontakt zu der Außenseite 13 des Achskörpers steht. Ein Eingraben der Materialspitzen erfolgt daher nur auf dem Oberflächenbereich 41, jedoch erfolgt ein direkter metallischer Kontakt, nämlich eine Flächenpressung, auch auf dem glatten Oberflächenbereich 45.

Der aufgeraute Oberflächenbereich 41 weist die Form eines sich überwiegend quer zur Hauptlängserstreckung des Achslenkers 10 erstreckenden Streifens auf. Dieser erstreckt sich vorzugsweise über die gesamte oder nahezu die gesamte Breite der Schale 21, 22.

Es hat sich gezeigt, dass im Fall einer nur partiellen und nicht vollflächigen Aufrauhung der Schalenkontur jener Bereich der Schalen 21, 22 mit der Aufrauhung versehen werden sollte, welcher zu dem anderen, d. h. hier dem hinteren Lenkerabschnitt 12, nächstliegend angeordnet ist. Vorzugsweise reicht die Aufrauhung 40 sogar bis unmittelbar an jenen Rand 47 (Fig. 6), an dem der Lenkerabschnitt 11 sein dem anderen Lenkerabschnitt 12 gegenüberliegendes Ende hat.

In den Figuren 8a bis 8c ist in drei Stadien stark übertrieben illustriert, wie beim zunehmenden Anziehen der Gewindebügel, und indem sich die Aufrauhung in der Randzone befindet, sich die Aufrauhung mit ihren Materialspitzen 55 tiefer in das gegenüberliegende, weichere Material einzugraben vermag. Dies erhöht den Widerstand gegen ein Lösen in Umfangsrichtung.

Hinzu tritt eine Art "Schneeschieber-Effekt". Denn die Spitzen 55 sind bestrebt, sich tiefer einzugraben. Da die Zugelemente 33, 34 genau an diesen Umfangsstellen an ihren Widerlagern 39, 49 ziehen, kommt es unter anderem über einen Hebelabstand zu einem Hineindrehen der Materialspitzen 55 in die Außenseite 13 des Achskörpers 3. Dadurch kommt es insbesondere auch vor dem Rand 47 und vor der ersten Reihe der Spitzen zu einem relativ starken Aufwerfen der Außenseite 13 des Achskörpers. Dieser "Schneeschieber-Effekt" wird noch unterstützt durch den weiter oben anhand der Fig. 7 beschriebenen Effekt der unterschiedlichen Radien R1 und R2, nämlich die reversible Teilverformung des ursprünglich zylindrischen Achskörpers 3. Die Schalen 23, 24 an dem hinteren Lenkerabschnitt 12 sind spiegelbildlich zur Achskörpermitte ebenfalls mit entsprechend aufgerauten Oberflächenbereichen 45 versehen. Das Aufrauen erfolgt, indem die betreffenden Oberflächenbereiche 41 mit einer durch Laserbearbeitung erzeugten Oberflächenstruktur versehen werden. Das partielle Aufrauen erfolgt vorzugsweise unter Einsatz eines Impulslasers. Dieser hat sich hinsichtlich des Werkstoffs Sphäroeisenguss, aus dem die Lenkerabschnitte 11, 12 vorzugsweise bestehen, als vorteilhafter erwiesen, als ein kontinuierlich arbeitender Laser. Von Vorteil ist es, wenn die Schalen vor der Laserbehandlung durch eine spanende Bearbeitung, z. B. mittels eines Fräswerkzeuges, auf ihrer gesamten teilzylindrischen Fläche vorbereitet und hierbei geglättet werden. Diese Vorbereitung verbessert das Ergebnis der anschließenden Laserbearbeitung.

Bei der Laserstrahlbearbeitung kann der Laser mit Vorschubrichtung in Längsrichtung der Schalen 21, 22, 23, 24 betrieben werden, oder mit Vorschubrichtung quer zur Längsrichtung der Schalen. Auch eine Strahlbehandlung zunächst in der einen Vorschubrichtung, dann in der hierzu quer angeordneten Vorschubrichtung ist möglich.

Die klemmende Einbindung des Achskörpers 3 zwischen den Achslenkerabschnitten 11, 12 erfolgt durch die in stangenförmigen Zugelementen 33, 34 wirkenden Zugkräfte K. Das Verspannen erfolgt vorzugsweise unter einem schrägen Winkel zur Horizontalen.

Als Zugelemente dienen zwei Gewindebügel 30, bestehend jeweils aus einem gebogenen Bügelabschnitt 37 und zwei geraden, zueinander parallelen Abschnitten, welche als die eigentlichen Zugelemente 33, 34 die Zugkraft übertragen. An ihren freien Enden sind die stangenförmigen Abschnitte mit Außengewinden versehen. Darauf aufgeschraubt sind Gewindemuttern 38, die sich an als Widerlager dienenden Flanschen 49 an dem hinteren Lenkerabschnitt 12 abstützen. Der Bügelabschnitt 37 jedes Gewindebügels 30 ist um ein an dem vorderen Lenkerabschnitt 1 1 angeformtes Widerlager 39 herum geführt. Bei dem Wiederlager 39 handelt es sich um eine gießtechnisch an dem Lenkerabschnitt 1 1 angeformte Nase, die mit einer zu der Biegung des Bügelabschnitts 37 korrespondierenden Kontur versehen ist, z. B. mit einer Rille.

Durch die Anordnung der Gewindebügel quer zu dem Achsrohr 3 wird erreicht, dass sich im Bereich der Achseinbindung die Zugelemente 33, 34 im Wesentlichen längs des Hauptverlaufs des Achslenkers 10 erstrecken, und sich die Enden der Zugelemente 33, 34 mit den dort aufgeschraubten Gewindemuttern 38 nach hinten und schräg unten erstrecken. So wird eine optimal geschützte Lage der Zugelemente und der Gewindemuttern 38 erreicht. Durch das partielle Aufrauen der Schalen 21 , 22, 23, 24 mittels des beschriebenen Strahlverfahrens kommt es zu einem dauerhaft festen Sitz in den Zonen unmittelbaren Kontakts zwischen den innen an den Lenkerabschnitten ausgebildeten Stützbereichen und der unbehandelten, vergleichsweise glatten Außenseite 13 des Achskörpers 3. Auf diese Weise ist ein sicheres Übertragen der Betriebskräfte gewährleistet, ohne dass es mit der Zeit zu einem Versatz kommt, sei dies in Achsenlängsrichtung oder, aufgrund der erheblichen Drehmomente beim Bremsen des Fahrzeugs, in Achsenumfangsrichtung.

Mit dem Anziehen der Zugelemente 33, 34 kommt in den aufgerauten Oberflächenbereichen 45 zu einem Eingraben der Spitzen der durch die Strahlbearbeitung aufgerauten und dabei zugleich gehärteten Oberflächenstruktur in die Außenseite 13 des Achskörpers 3.

## Patentansprüche

1. Achslenker für eine Fahrzeugachse, der sich aus einem in Fahrtrichtung vorderen (11) und einem in Fahrtrichtung hinteren (12) Lenkerabschnitt zusammensetzt, wobei die Lenkerabschnitte (11 , 12) mit an ihnen angeformten Stützflächen zur Abstützung gegen einen Rundachskörper der Fahrzeugachse versehen und durch Zugelemente (33, 34) miteinander verbunden sind, **dadurch gekennzeichnet, dass** die Stützfläche des vorderen Lenkerabschnitts (11) auf einzelne Schalen (21 , 22) mit in Achsenumfangsrichtung gebogener Schalenkontur aufgeteilt ist, und sich zwischen den Schalen (21 , 22) ein stützflächenfreier Umfangsabschnitt (27) befindet und, dass auch die Stützfläche des hinteren Lenkerabschnitts (12) auf einzelne Schalen (23, 24) mit in Achsenumfangsrichtung gebogener Schalenkontur aufgeteilt ist, und sich zwischen den Schalen (23, 24) ein stützflächenfreier Umfangsabschnitt (28) befindet.

2. Achslenker nach Anspruch 1, **dadurch gekennzeichnet, dass** der vordere Lenkerabschnitt aus Metallguss besteht und einen Hohlraum aufweist, und dass sich auf dem Umfangsabschnitt (27) eine in den Hohlraum führende Öffnung (29) befindet.

3. Achslenker nach Anspruch 1 oder 2, **dadurch gekennzeichnet, dass** die Schalenkontur an dem vorderen Lenkerabschnitt (11) einen der Form eines Teilkreises folgenden Biegeverlauf aufweist.

4. Achslenker nach Anspruch 1, **dadurch gekennzeichnet, dass** der hintere Lenkerabschnitt (12) aus Metallguss besteht.

5. Achslenker nach Anspruch 1 oder 4, **dadurch gekennzeichnet, dass** die Schalenkontur an dem hinteren Lenkerabschnitt (12) einen der Form eines Teilkreises folgenden Biegeverlauf aufweist.

6. Achslenker nach einem der vorangehenden Ansprüche, **dadurch gekennzeichnet, dass** sich die Schalen (21, 22, 23, 24) beider Lenkerabschnitte (11, 12) aufsummiert über einen Umfang erstrecken, der zwischen 40% und 70% des Gesamtumfangs des Rundachskörpers beträgt.

7. Achslenker nach einem der vorangehenden Ansprüche, **dadurch gekennzeichnet, dass** in Achsenumfangsrichtung die Erstreckung der Schalen (21, 22; 23, 24) das 1- bis 1 ,6- fache der Erstreckung des zwischen ihnen angeordneten Umfangsabschnitts (27; 28) beträgt.

8. Achslenker nach einem der vorangehenden Ansprüche, **dadurch gekennzeichnet, dass** die Schalen (21, 22) des vorderen Lenkerabschnitts (1 1) eine größere Breite quer zur Hauptlängserstreckung des Achslenkers (10) aufweisen, als der Lenkerabschnitt (1 1) in seinem an die Schale (21, 22) jeweils angrenzenden Bereich.

9. Achslenker nach einem der vorangehenden Ansprüche, **dadurch gekennzeichnet, dass** die Oberfläche der Schalen (21, 22; 23, 24) mit einer die Haftfähigkeit verbessernden Aufrauhung (40) versehen ist.

10. Achslenker nach Anspruch 9, **dadurch gekennzeichnet, dass** die Aufrauhung (40) nur partiell ist, indem die Schalen (21, 22, 23, 24) mindestens einen aufgerauten Oberflächenbereich (41) und mindestens einen nicht aufgerauten, glatten Oberflächenbereich (45) aufweisen.

11. Achslenker nach Anspruch 10, **dadurch gekennzeichnet, dass** die Oberflächenbereiche (41, 45) jeweils einen der Form eines Teilkreises folgenden Biegeverlauf aufweisen, und dass die in dem aufgerauten Oberflächenbereich (41) vorhandenen Materialspitzen in Bezug auf den durch den glatten Oberflächenbereich (45) bestimmten Teilkreis radial überstehen.

12. Achslenker nach Anspruch 10 oder 11, **dadurch gekennzeichnet, dass** der aufgeraute Oberflächenbereich (41) kleiner als der glatte Oberflächenbereich (45) ist.

13. Achslenker nach einem der Ansprüche 10 - 12, **dadurch gekennzeichnet, dass** nur ein Bereich der Schale (21, 22, 23, 24) mit der Aufrauhung (40) versehen ist, welcher zu dem anderen Lenkerabschnitt nächstliegend angeordnet ist.

14. Achslenker nach einem der Ansprüche 10 - 13, **dadurch gekennzeichnet, dass** der aufgeraute Oberflächenbereich (41) die Form eines sich überwiegend quer zur Hauptlängserstreckung des Achslenkers (10) erstreckenden Streifens aufweist, vorzugsweise eines sich über die gesamte oder nahezu die gesamte Breite der Schale (21, 22, 23, 24) erstreckenden Streifens.

15. Achslenker nach einem der Ansprüche 9 bis 14, **dadurch gekennzeichnet, dass** die Aufrauhung (40) aus einer durch Bearbeiten in einem Strahlverfahren erzeugten Oberflächenstruktur besteht.

16. Achslenker nach Anspruch 15, **dadurch gekennzeichnet, dass** die Aufrauhung (40) aus einer durch Bearbeiten mittels eines Festkörperlasers erzeugten Oberflächenstruktur besteht.

17. Achsaufhängung für eine Fahrzeugachse, mit einem Rundachskörper (3) und mindestens einem den Rundachskörper (3) kreuzenden und gegenüber dem Fahrzeug abgestützten Achslenker (10), der sich aus einem in Fahrtrichtung vorderen (11) und einem in Fahrtrichtung hinteren (12) Lenkerabschnitt zusammensetzt, wobei die Lenkerabschnitte (11 , 12) mit an ihnen angeformten Stützflächen unmittelbar gegen die Außenseite (13) des Rundachskörpers (3) abgestützt sind und durch quer zu dem Rundachskörper (3) sich erstreckende Zugelemente (33, 34) miteinander verbunden sind, **dadurch gekennzeichnet, dass** die Stützfläche des vorderen Lenkerabschnitts (11) auf einzelne Schalen (21, 22) mit in Achsenumfangsrichtung gebogener Schalenkontur aufgeteilt ist, und dass sich zwischen den Schalen (21 , 22) ein Umfangsabschnitt (27) ohne eine unmittelbare Abstützung des Lenkerabschnitts (11) an dem Rundachskörper (3) befindet und, dass auch die Stützfläche des hinteren Lenkerabschnitts (12) auf einzelne Schalen (23, 24) mit in Achsenumfangsrichtung gebogener Schalenkontur aufgeteilt ist, und dass sich zwischen den Schalen (23, 24) ein Umfangsabschnitt (28) ohne eine unmittelbare Abstützung des Lenkerabschnitts (12) an dem Rundachskörper (3) befindet.

18. Achsaufhängung nach Anspruch 17, **dadurch gekennzeichnet, dass** der vordere Lenkerabschnitt aus Metallguss besteht und einen Hohlraum aufweist, und dass sich auf dem Umfangsabschnitt (27) eine in den Hohlraum führende Öffnung (29) befindet.

19. Achsaufhängung nach Anspruch 17 oder 18, **dadurch gekennzeichnet, dass** die Schalenkontur an dem vorderen Lenkerabschnitt (11) einen der Form eines Teilkreises folgenden Biegeverlauf aufweist mit einem Radius, welcher gleich oder größer als der Radius (R1) der Außenseite (13) des zylindrischen Rundachskörpers (3) ist.

20. Achsaufhängung nach einem der Ansprüche 17 - 19, **dadurch gekennzeichnet, dass** der hintere Lenkerabschnitt (12) aus Metallguss besteht.

21. Achsaufhängung nach einem der Ansprüche 17- 20, **dadurch gekennzeichnet, dass** die Schalenkontur an dem hinteren Lenkerabschnitt (12) einen der Form eines Teilkreises folgenden Biegeverlauf aufweist mit einem Radius (R2), welcher größer als der Radius (R1) der Außenseite (13) des zylindrischen Rundachskörpers (3) ist.

22. Achsaufhängung nach einem der Ansprüche 21 bis 23, **dadurch gekennzeichnet, dass** sich die Schalen (21, 22, 23, 24) beider Lenkerabschnitte (11, 12) aufsummiert über einen Umfang erstrecken, der zwischen 40% und 70% des Gesamtumfangs des Rundachskörpers (3) beträgt.

23. Achsaufhängung nach einem der Ansprüche 17 - 22, **dadurch gekennzeichnet, dass** in Achsenumfangsrichtung die Erstreckung der Schalen (21, 22; 23, 24) das 1- bis 1,6-fache der Erstreckung des zwischen ihnen angeordneten Umfangsabschnitts (27; 28) beträgt.

24. Achsaufhängung nach einem der Ansprüche 17 - 23, **dadurch gekennzeichnet, dass** die Schalen (21, 22) des vorderen Lenkerabschnitts (1 1) eine größere Breite quer zur Hauptlängserstreckung des Achslenkers (10) aufweisen, als der Lenkerabschnitt (1 1) in seinem an die Schale (21, 22) jeweils angrenzenden Bereich.

25. Achsaufhängung nach einem der Ansprüche 17 - 24, **dadurch gekennzeichnet, dass** die Oberfläche der Schalen (21, 22; 23, 24) mit einer die Haftfähigkeit gegenüber dem Rundachskörper (3) verbessernden Aufrauhung (40) versehen sind.

26. Achsaufhängung nach Anspruch 25, **dadurch gekennzeichnet, dass** die Aufrauhung (40) nur partiell ist, indem die Schalen (21, 22, 23, 24) mindestens einen aufgerauten Oberflächenbereich (41) und mindestens einen nicht aufgerauten, glatten Oberflächenbereich (45) aufweisen.

27. Achsaufhängung nach Anspruch 26, **dadurch gekennzeichnet, dass** die Oberflächenbereiche (41, 45) jeweils einen der Form eines Teilkreises folgenden Biegeverlauf aufweisen, und dass die in dem aufgerauten Oberflächenbereich (41) vorhandenen Materialspitzen in Bezug auf den durch den glatten Oberflächenbereich (45) bestimmten Teilkreis radial überstehen.

28. Achsaufhängung nach Anspruch 26 oder 27, **dadurch gekennzeichnet, dass** der aufgeraute Oberflächenbereich (41) kleiner als der glatte Oberflächenbereich (45) ist.

29. Achsaufhängung nach einem der Ansprüche 26 - 28, **dadurch gekennzeichnet, dass** nur ein Bereich der Schale (21, 22, 23, 24) mit der Aufrauhung (40) versehen ist, welcher zu dem anderen Lenkerabschnitt nächstliegend angeordnet ist.

30. Achsaufhängung nach einem der Ansprüche 26 - 29, **dadurch gekennzeichnet, dass** der aufgeraute Oberflächenbereich (41) die Form eines sich überwiegend quer zur Hauptlängserstreckung des Achslenkers (10) erstreckenden Streifens aufweist, vorzugsweise eines sich über die gesamte oder nahezu die gesamte Breite der Schale (21, 22, 23, 24) erstreckenden Streifens.

31. Achsaufhängung nach einem der Ansprüche 25 bis 30, **dadurch gekennzeichnet, dass** die Aufrauhung (40) aus einer durch Bearbeiten in einem Strahlverfahren erzeugten Oberflächenstruktur besteht.

32. Achsaufhängung nach Anspruch 33, **dadurch gekennzeichnet, dass** die Aufrauhung (40) aus einer durch Bearbeiten mittels eines Festkörperlasers erzeugten Oberflächenstruktur besteht.

33. Achsaufhängung nach einem der Ansprüche 17 - 32, **dadurch gekennzeichnet, dass** die Zugelemente (33, 34) Bestandteile mindestens eines U-förmigen Gewindebügels (30) sind, und dass der Gewindebügel (30) mit seinem Bügelabschnitt (37) um ein an dem vorderen Lenkerabschnitt (11) angeformtes Widerlager (39) herumgeführt ist

## Claims

1. Axle link for a vehicle axle, which is composed of a front link portion (11) in the direction of travel and a rear link portion (12) in the direction of travel, the link portions (11, 12) being provided with support surfaces formed integrally thereon for support against a rotary axle body of the vehicle axle and being connected to one another by tension elements (33, 34), **characterized in that** the support surface of the front link portion (11) is divided into individual shells (21, 22) having a shell contour curved in the axle circumferential direction, and a support surface-free circumferential portion (27) is located between the shells (21, 22), **and in that** the support surface of the rear link portion (12) is also divided into individual shells (23, 24) having a shell contour curved in the axle circumferential direction, and a support surface-free circumferential portion (28) is located between the shells (23, 24).

2. The axle link according to claim 1, **characterized in that** the front link portion consists of cast metal and has a cavity, **and in that** an opening (29) leading into the cavity is located on the circumferential portion (27).

3. Axle link according to either claim 1 or claim 2, **characterized in that** the shell contour on the front link portion (11) has a curved profile following the shape of a partial circle.

4. Axle link according to claim 1, **characterized in that** the rear link portion (12) consists of cast metal.

5. Axle link according to either claim 1 or claim 4, **characterized in that** the shell contour on the rear link portion (12) has a curved profile following the shape of a partial circle.

6. Axle link according to any of the preceding claims, **characterized in that** the shells (21, 22, 23, 24) of the two link portions (11, 12), when added together, extend over a circumference that is between 40% and 70% of the total circumference of the rotary axle body.

7. Axle link according to any of the preceding claims, **characterized in that** the extension of the shells (21, 22; 23, 24) is 1 to 1.6 times the extension of the circumferential portion (27; 28) arranged therebetween.

8. Axle link according to any of the preceding claims, **characterized in that** the shells (21, 22) of the front link portion (11) have a greater width transversely to the main longitudinal extension of the axle link (10) than the link portion (11) in the region thereof adjacent to the shell (21, 22).

9. Axle link according to any of the preceding claims, **characterized in that** the surface of the shells (21, 22; 23, 24) is provided with roughening (40) which improves the adhesion.

10. Axle link according to claim 9, **characterized in that** the roughening (40) is only partial, **in that** the shells (21, 22, 23, 24) have at least one roughened surface region (41) and at least one non-roughened, smooth surface region (45).

11. Axle link according to claim 10, **characterized in that** the surface regions (41, 45) each have a curved profile following the shape of a partial circle, **and in that** the material peaks present in the roughened surface region (41) project radially in relation to the partial circle defined by the smooth surface region (45).

12. Axle link according to either claim 10 or claim 11, **characterized in that** the roughened surface region (41) is smaller than the smooth surface region (45).

13. Axle link according to any of claims 10-12, **characterized in that** only one region of the shell (21, 22, 23, 24) is provided with the roughening (40), which is arranged closest to the other link portion.

14. Axle link according to any of claims 10-13, **characterized in that** the roughened surface region (41) is in the shape of a strip extending predominantly transversely to the main longitudinal extension of the axle link (10), preferably a strip extending over the entire width or almost the entire width of the shell (21, 22, 23, 24).

15. Axle link according to any of claims 9 to 14, **characterized in that** the roughening (40) consists of a surface structure produced by machining in a blasting process.

16. Axle link according to claim 15, **characterized in that** the roughening (40) consists of a surface structure produced by machining by means of a solid-state laser.

17. Axle suspension for a vehicle axle, comprising a rotary axle body (3) and at least one axle link (10) which crosses the rotary axle body (3) and is supported with respect to the vehicle and which is composed of a front link portion (11) in the direction of travel and a rear link portion (12) in the direction of travel, the link portions (11, 12) being supported directly against the exterior (13) of the rotary axle body (3) with supporting surfaces integrally formed on said portions, and being connected to one another by tension elements (33, 34) extending transversely to the rotary axle (3), **characterized in that** the support surface of the front link portion (11) is divided into individual shells (21, 22) having a shell contour curved in the axial circumferential direction, **and in that** a circumferential portion (27) without direct support of the link portion (11) on the rotary axle body (3) is located between the shells (21, 22), **and in that** the support surface of the rear link portion (12) is also divided into individual shells (23, 24) having a shell contour curved in the axle circumferential direction, **and in that** a circumferential portion without direct support of the link portion (12) on the rotary axle body (3) (28) is located between the shells (23, 24).

18. Axle suspension according to claim 17, **characterized in that** the front link portion consists of cast metal and has a cavity, **and in that** an opening (29) leading into the cavity is located on the circumferential portion (27).

19. Axle suspension according to either claim 17 or claim 18,
**characterized in that** the shell contour on the front link portion (11) has a curved profile following the shape of a partial circle, having a radius which is equal to or greater than the radius (R1) of the exterior (13) of the cylindrical rotary axle body (3).

20. Axle suspension according to any of claims 17-19, **characterized in that** the rear link portion (12) consists of cast metal.

21. Axle suspension according to any of claims 17-20, **characterized in that** the shell contour on the rear link portion (12) has a curved profile following the shape of a partial circle, having a radius (R2) which is greater than the radius (R1) of the exterior (13) of the cylindrical rotary axle body (3).

22. Axle suspension according to any of claims 21 to 23, **characterized in that** the shells (21, 22, 23, 24) of the two link portions (11, 12), when added together, extend over a circumference that is between 40% and 70% of the total circumference of the rotary axle body (3).

23. Axle suspension according to any of claims 17-22, **characterized in that** the extension of the shells (21, 22; 23, 24) is 1 to 1.6 times the extension of the circumferential portion (27; 28) arranged therebetween.

24. Axle suspension according to any of claims 17-23, **characterized in that** the shells (21, 22) of the front link portion (11) have a greater width transversely to the main longitudinal extension of the axle link (10) than the link portion (11) in the region thereof adjacent to the shell (21, 22).

25. Axle suspension according to any of claims 17-24, **characterized in that** the surface of the shells (21, 22; 23, 24) is provided with roughening (40) which improves the adhesion with respect to the rotary axle body (3).

26. Axle suspension according to claim 25, **characterized in that** the roughening (40) is only partial, **in that** the shells (21, 22, 23, 24) have at least one roughened surface region (41) and at least one non-roughened, smooth surface region (45).

27. Axle suspension according to claim 26, **characterized in that** the surface regions (41, 45) each have a curved profile following the shape of a partial circle, **and in that** the material peaks present in the roughened surface region (41) project radially in relation to the partial circle defined by the smooth surface region (45).

28. Axle suspension according to either claim 26 or claim 27,
**characterized in that** the roughened surface region (41) is smaller than the smooth surface region (45).

29. Axle suspension according to any of claims 26-28, **characterized in that** only one region of the shell (21, 22, 23, 24) is provided with the roughening (40), which is arranged closest to the other link portion.

30. Axle suspension according to any of claims 26-29, **characterized in that** the roughened surface region (41) is in the shape of a strip extending predominantly transversely to the main longitudinal extension of the axle link (10), preferably a strip extending over the entire width or almost the entire width of the shell (21, 22, 23, 24).

31. Axle suspension according to any of claims 25 to 30, **characterized in that** the roughening (40) consists of a surface structure produced by machining in a blasting process.

32. Axle suspension according to claim 33, **characterized in that** the roughening (40) consists of a surface structure produced by machining by means of a solid-state laser.

33. Axle suspension according to any of claims 17-32, **characterized in that** the tension elements (33, 34) are components of at least one U-shaped threaded bracket (30), and **in that** the bracket portion (37) of the threaded bracket (30) is guided around an abutment (39) which is integrally formed on the front link portion (11).

## Revendications

1. Guide d'essieu pour un essieu de véhicule, qui se compose d'une partie de guide avant (11) dans le sens de marche et d'une partie de guide arrière (12) dans le sens de marche, dans lequel les parties de guide (11, 12) sont pourvues de surfaces d'appui formées sur celles-ci pour l'appui contre un corps d'essieu rond de l'essieu de véhicule et reliées l'une à l'autre par des éléments de traction (33, 34), **caractérisé en ce que** la surface d'appui de la partie de guide avant (11) est divisée en coques (21, 22) individuelles avec un contour de coque courbé dans la direction circonférentielle d'essieu, et une partie circonférentielle (27) exempte de surface d'appui se trouve entre les coques (21, 22) et que la surface d'appui de la partie de guide arrière (12) est également divisée en coques (23, 24) individuelles avec un contour de coque courbé dans la direction circonférentielle d'essieu, et une partie circonférentielle (28) exempte de surface d'appui se trouve entre les coques (23, 24).

2. Guide d'essieu selon la revendication 1, **caractérisé en ce que** la partie de guide avant est constituée de métal coulé et présente une cavité, et qu'une ouverture (29) menant dans la cavité se trouve sur la partie circonférentielle (27).

3. Guide d'essieu selon la revendication 1 ou 2, **caractérisé en ce que** le contour de coque présente sur la partie de guide avant (11) un tracé courbé suivant la forme d'un cercle partiel.

4. Guide d'essieu selon la revendication 1, **caractérisé en ce que** la partie de guide arrière (12) est constituée de métal coulé.

5. Guide d'essieu selon la revendication 1 ou 4, **caractérisé en ce que** le contour de coque présente sur la partie de guide arrière (12) un tracé courbé suivant la forme d'un cercle partiel.

6. Guide d'essieu selon l'une quelconque des revendications partielles, **caractérisé en ce que** les coques (21, 22, 23, 24) des deux parties de guide (11, 12) s'étendent au total sur une circonférence qui est comprise entre 40 % et 70 % de la circonférence totale du corps d'essieu rond.

7. Guide d'essieu selon l'une quelconque des revendications partielles, **caractérisé en ce que** dans la direction circonférentielle d'essieu l'étendue des coques (21, 22 ; 23, 24) est égale à 1 à 1,6 fois l'étendue de la partie circonférentielle (27 ; 28) disposée entre celles-ci.

8. Guide d'essieu selon l'une quelconque des revendications partielles, **caractérisé en ce que** les coques (21, 22) de la partie de guide avant (11) présentent une largeur plus grande transversalement par rapport à l'étendue longitudinale principale du guide d'essieu (10) que la partie de guide (11) dans sa zone respectivement adjacente à la coque (21, 22).

9. Guide d'essieu selon l'une quelconque des revendications partielles, **caractérisé en ce que** la surface des coques (21, 22 ; 23, 24) est pourvue d'une rugosité (40) améliorant l'adhérence.

10. Guide d'essieu selon la revendication 9, **caractérisé en ce que** la rugosité (40) n'est que partielle, du fait que les coques (21, 22, 23, 24) présentent au moins une zone de surface rugueuse (41) et au moins une zone de surface lisse (45), non rugueuse.

11. Guide d'essieu selon la revendication 10, **caractérisé en ce que** les zones de surface (41, 45) présentent respectivement un tracé courbé suivant la forme d'un cercle partiel, et que les pointes de matière présentes dans la zone de surface rugueuse (41) font radialement saillie par rapport au cercle partiel défini par la zone de surface lisse (45).

12. Guide d'essieu selon la revendication 10 ou 11, **caractérisé en ce que** la zone de surface rugueuse (41) est plus petite que la zone de surface lisse (45).

13. Guide d'essieu selon l'une quelconque des revendications 10 - 12, **caractérisé en ce que** seule une zone de la coque (21, 22, 23, 24) qui est la plus proche de l'autre partie de guide est pourvue de la rugosité (40).

14. Guide d'essieu selon l'une quelconque des revendications 10 - 13, **caractérisé en ce que** la zone de surface rugueuse (41) présente la forme d'une bande s'étendant principalement transversalement par rapport à l'étendue longitudinale principale du guide d'essieu (10), de préférence d'une bande s'étendant sur toute ou presque toute la largeur de la coque (21, 22, 23, 24) .

15. Guide d'essieu selon l'une quelconque des revendications 9 à 14, **caractérisé en ce que** la rugosité (40) est constituée d'une structure de surface produite par usinage dans un procédé de sablage.

16. Guide d'essieu selon la revendication 15, **caractérisé en ce que** la rugosité (40) est constituée d'une structure de surface produite par usinage au moyen d'un laser à solide.

17. Suspension d'essieu pour un essieu de véhicule, avec un corps d'essieu rond (3) et au moins un guide d'essieu (10) croisant le corps d'essieu rond (3) et en appui par rapport au véhicule, qui se compose d'une partie de guide avant (11) dans le sens de marche et d'une partie de guide arrière (12) dans le sens de marche, dans laquelle les parties de guide (11, 12) sont en appui avec des surfaces d'appui formées sur celles-ci contre la face extérieure (13) du corps d'essieu rond et sont reliées l'une à l'autre par des éléments de traction (33, 34) s'étendant transversalement par rapport au corps d'essieu rond (3), **caractérisée en ce que** la surface d'appui de la partie de guide avant (11) est divisée en coques (21, 22) individuelles avec un contour de coque courbé dans la direction circonférentielle d'essieu, et qu'une partie circonférentielle (27) se trouve entre les coques (21, 22) sans un appui direct de la partie de guide (11) sur le corps d'essieu rond (3) et que la surface d'appui de la partie de guide arrière (12) est également divisée en coques (23, 24) individuelles avec un contour de coque courbé dans la direction circonférentielle d'essieu, et qu'une partie circonférentielle (28) se trouve entre les coques (23, 24) sans un appui direct de la partie de guide (12) sur le corps d'essieu rond (3).

18. Suspension d'essieu selon la revendication 17, **caractérisée en ce que** la partie de guide avant est constituée de métal coulé et présente une cavité, et qu'une ouverture (29) menant dans la cavité se trouve sur la partie circonférentielle (27).

19. Suspension d'essieu selon la revendication 17 ou 18, **caractérisée en ce que** le contour de coque présente sur la partie de guide avant (11) un tracé courbé suivant la forme d'un cercle partiel avec un rayon, lequel est supérieur ou égal au rayon (R1) de la face extérieure (13) du corps d'essieu rond (3) cylindrique.

20. Suspension d'essieu selon l'une quelconque des revendications 17 - 19, **caractérisée en ce que** la partie de guide arrière (12) est constituée de métal coulé.

21. Suspension d'essieu selon l'une quelconque des revendications 17- 20, **caractérisée en ce que** le contour de coque présente sur la partie de guide arrière (12) un tracé courbé suivant la forme d'un cercle partiel avec un rayon (R2), lequel est plus grand que le rayon (R1) de la face extérieure (13) du corps d'essieu rond (3) cylindrique.

22. Suspension d'essieu selon l'une quelconque des revendications 21 à 23, **caractérisée en ce que** les coques (21, 22, 23, 24) des deux parties de guide (11, 12) s'étendent au total sur une périphérie qui est comprise entre 40 % et 70 % de la périphérie totale du corps d'essieu rond (3).

23. Suspension d'essieu selon l'une quelconque des revendications 17 - 22, **caractérisée en ce que** dans la direction circonférentielle d'essieu l'étendue des coques (21, 22 ; 23, 24) est égale à 1 à 1,6 fois l'étendue de la partie circonférentielle (27 ; 28) disposée entre celles-ci.

24. Suspension d'essieu selon l'une quelconque des revendications 17 - 23, **caractérisée en ce que** les coques (21, 22) de la partie de guide avant (11) présentent une largeur plus grande transversalement par rapport à l'étendue longitudinale principale du guide d'essieu (10) que la partie de guide (11) dans sa zone respectivement adjacente à la coque (21, 22).

25. Suspension d'essieu selon l'une quelconque des revendications 17 - 24, **caractérisée en ce que** la surface des coques (21, 22 ; 23, 24) est pourvue d'une rugosité (40) améliorant l'adhérence par rapport au corps d'essieu rond (3).

26. Suspension d'essieu selon la revendication 25, **caractérisée en ce que** la rugosité (40) n'est que partielle, du fait que les coques (21, 22, 23, 24) présentent au moins une zone de surface rugueuse (41) et au moins une zone de surface lisse (45), non rugueuse.

27. Suspension d'essieu selon la revendication 26, **caractérisée en ce que** les zones de surface (41, 45) présentent respectivement un tracé courbé suivant la forme d'un cercle partiel, et que les pointes de matière présentes dans la zone de surface rugueuse (41) font saillie radialement par rapport au cercle partiel défini par la zone de surface lisse (45).

28. Suspension d'essieu selon la revendication 26 ou 27, **caractérisée en ce que** la zone de surface rugueuse (41) est plus petite que la zone de surface lisse (45).

29. Suspension d'essieu selon l'une quelconque des revendications 26 - 28, **caractérisée en ce que** seule une zone de la coque (21, 22, 23, 24) qui est la plus proche de l'autre partie de guide est pourvue de la rugosité (40).

30. Suspension d'essieu selon l'une quelconque des revendications 26 - 29, **caractérisée en ce que** la zone de surface rugueuse (41) présente la forme d'une bande s'étendant principalement transversalement par rapport à l'étendue longitudinale principale du guide d'essieu (10), de préférence d'une bande s'étendant sur toute ou presque toute la largeur de la coque (21, 22, 23, 24) .

31. Suspension d'essieu selon l'une quelconque des revendications 25 à 30, **caractérisée en ce que** la rugosité (40) est constituée d'une structure de surface produite par usinage dans un procédé de sablage.

32. Suspension d'essieu selon la revendication 33, **caractérisée en ce que** la rugosité (40) est constituée d'une structure de surface produite par usinage au moyen d'un laser à solide.

33. Suspension d'essieu selon l'une quelconque des revendications 17 - 32, **caractérisée en ce que** les éléments de traction (33, 34) font partie d'au moins un étrier fileté (30) en forme de U, et que l'étrier fileté (30) est guidé avec sa partie d'étrier (37) autour d'une butée (39) formée sur la partie de guide avant (11).
